Europäisches Patentamt

European Patent Office

Office européen des brevets

(19)

(11) Veröffentlichungsnummer : **0 129 070**
**B1**

(12) **EUROPÄISCHE PATENTSCHRIFT**

(45) Veröffentlichungstag der Patentschrift :
30.09.87

(21) Anmeldenummer : **84105656.7**

(22) Anmeldetag : **18.05.84**

(51) Int. Cl.⁴ : **C 25 D 13/08**, C 08 G 73/06//
H01B1/12

(54) Verfahren zur Herstellung von Poly(heteroaromaten) und nach diesem Verfahren erhaltene filmförmige Produkte.

(30) Priorität : **25.05.83 DE 3318856**

(43) Veröffentlichungstag der Anmeldung :
**27.12.84 Patentblatt 84/52**

(45) Bekanntmachung des Hinweises auf die Patenterteilung : **30.09.87 Patentblatt 87/40**

(84) Benannte Vertragsstaaten :
**BE DE FR GB NL**

(56) Entgegenhaltungen :
EP-A- 0 055 358
US-A- 3 574 072
J.C.S Chem. Comm. Seiten 635 und 854

(73) Patentinhaber : **BASF Aktiengesellschaft**
**Carl-Bosch-Strasse 38**
**D-6700 Ludwigshafen (DE)**

(72) Erfinder : **Wegner, Gerhard, Dr.**
**Hinterhofstrasse 46**
**D-7809 Denzlingen (DE)**
Erfinder : **Wernet, Wolfgang**
**Wenzinger Strasse**
**D-7800 Freiburg (DE)**

EP 0 129 070 B1

## Beschreibung

Die Erfindung betrifft ein Verfahren zur Herstellung von Poly(heteroaromaten) durch anodische Oxidation, von heteroaromatischen Verbindungen in einem wäßrigen Elektrolyt-Dispergierungsmedium in Gegenwart von Leitsalzen unter Abscheiden der Poly(heteroaromaten) in Gegenwart von Leitsalzen unter Abscheiden der Poly(heteroaromaten) auf der Oberfläche der, vorzugsweise flächig ausgebildeten, Anode.

Poly(heteroaromaten), wie z. B. Polypyrrol, haben in jüngster Zeit unter anderem deswegen besonderes Interesse gefunden, weil sie durch Dotieren mit Elektronenakzeptoren einfach und leicht in elektrisch hochleitfähige Systeme mit metallischer Leitfähigkeit überführt werden können. Für ihre Anwendung in der Elektrotechnik, bei Halbleiter-Bauteilen, Schaltern, Abschirmmaterialien oder Solarzellen ist es häufig von Vorteil, wenn die Poly(heteroaromaten) in Form von Filmen vorliegen und zum Einsatz gelangen können.

Es ist bekannt, filmförmige Polymere von Pyrrolen durch anodische Oxidation von Pyrrol oder substituierten Pyrrolen in einem polaren, organischen Elektrolyt-Dispergierungsmedium in Gegenwart von Leitsalzen herzustellen. Di so erhaltenen Polypyrrol-Filme haben eine hohe elektrische Leitfähigkeit bis zu etwa $10^2$ Ohm$^{-1}$ (vgl. z. B. J.C.S. Chem. Comm. 1979, S. 635 ; J.C.S. Chem. Comm. 1979, S. 854 oder DE-A-3 049 551). Nachteilig an diesem Verfahren ist der Einsatz von organischen Lösungsmitteln, z. B. Acetonitril, auch wenn erwähnt ist, daß geringe Mengen an Wasser, beispielsweise bis zu 3 Gew.-%, dem Elektrolyt-Lösungsmittel zur Erhöhung der elektrischen Leitfähigkeit zugesetzt werden können.

In der US-PS-3 574 072 wird ebenfalls die elektrochemische Polymerisation von 5- und 6-Ring-Heterocyclen beschrieben. Die Elektrolyse findet dabei in einem organischen Lösungsmittel und einem alkalischen Medium, insbesondere einem wäßrig-alkalischen Medium, statt. Nach den Beispielen der US-PS-3 574 072 liegt der Anteil des Wassers im Elektrolyt-Dispergierungsmedium nicht über 25 Gew.-%, bezogen auf das Elektrolyt-Dispergierungsmedium. Versuche, den Wasser-Anteil im Elektrolyt-Dispergierungsmedium zu Lasten des organischen Lösungsmittels zu erhöhen bzw. das organische Lösungsmittel vollständig durch Wasser zu ersetzen, führten nur zu minderwertigen Produkten, insbesondere konnten keine vernünftigen, zusammenhängenden Polymerfilme erhalten werden.

Der vorliegenden Erfindung lag die Aufgabe zugrunde, ein Verfahren zur Herstellung von Poly(heteroaromaten) aufzuzeigen, welches einfach und leicht durchführbar ist, bei dem in Wasser oder wäßrigen Systemen gearbeitet werden kann, und das es gestattet, gezielt und reproduzierbar Filme mit den gewünschten, vorbestimmten Eigenschaften, wie z. B. Größe, Dicke, mechanischen Eigenschaften etc., bei größtmöglicher Variation der Verfahrensbedingungen herzustellen.

Die erhaltenen Poly(heteroaromaten) sollen dabei gleichzeitig eine gute elektrische Leitfähigkeit besitzen und/oder in einfacher Weise in elektrisch hochleitfähige Produkte überführt werden können.

Es wurde überraschenderweise gefunden, daß diese Aufgabe durch ein Verfahren gelöst wird, bei dem man in einem wäßrigen Elektrolyt-Dispergierungsmedium dispergierte heteroaromatische Verbindungen unter Zusatz von Emulgatoren sowie gegebenenfalls in Gegenwart von zusätzlichen Leitsalzen durch elektrochemische Oxidation polymerisiert.

Gegenstand der Erfindung ist demzufolge ein Verfahren zur Herstellung insbesondere filmförmiger Poly(heteroaromaten) durch anodische Oxidation von heteroaromatischen Verbindungen in einem zu mindesten aus 80 Gew.-% Wasser bestehenden Elektrolyt-Dispergierungsmedium in Gegenwart von Leitsalzen unter Abscheiden der Poly(heteroaromaten) auf der Oberfläche der Anode, welches dadurch gekennzeichnet ist, daß man die Polymerisation in einem wäßrigen Elektrolyt-Dispergierungsmedium, welches die monomeren heteroaromatischen Verbindungen dispergiert enthält, unter Zusatz von Emulgatoren durchführt.

Nachdem bei der elektrochemischen Polymerisation von Heteroaromaten in überwiegend bzw. ausschließlich wäßrigen Systemen in Gegenwart üblicher Leitsalze nur griesförmige Polymere oder allenfalls minderwertige Filme mit unzureichender mechanischer Festigkeit erhalten werden konnten, war es äußerst überraschend, daß durch den Zusatz von Emulgatoren, zu dem wäßrige Elektrolyt-Dispergierungsmedium zusammenhängende, feste Filme guter Qualität erlangt werden können. Da die Emulgatoren die Monomeren in kleinen Tröpfchen und Micellen zusammenhalten und die Polymerisation üblicherweise in diesen Tröpfchen stattfindet, stand für einen Fachmann vielmehr zu erwarten, daß durch den Zusatz der Emulgatoren nicht die Filmbildung, sondern im Gegenteil die Bildung von teilchenförmigen, insbesondere pulverförmigen Polymeren begünstigt wird. Die Filme der Poly(heteroaromaten) können erfindungsgemäß einfach und reproduzierbar in jeder gewünschten Größe und Dicke hergestellt werden und lassen sich im allgemeinen — bei hinreichend großer Dicke — ohne Schwierigkeiten von der flächig ausgebildeten Anodenoberfläche abziehen. Die erfindungsgemäß hergestellten Filme der Poly(heteroaromaten) sind dabei bereits in aller Regel elektrisch leitfähig und zeigen elektrische Leitfähigkeiten im allgemeinen über $10^{-2}$ Ohm$^{-1}$cm$^{-1}$, vorzugsweise über $10^0$ Ohm$^{-1}$cm$^{-1}$.

Unter Poly(heteroaromaten) werden im Rahmen dieser Erfindung Polymere verstanden, die wiederkehrende heteroaromatische Struktureinheiten eingebaut enthalten. Die Poly(heteroaromaten) können neben den heteroaromatischen Einheiten auch noch weitere Comonomer-Einheiten eingebaut enthalten. Gleichermaßen sind unter Poly(heteroaromaten) hochmolekulare wie auch entsprechende oligomere Produkte zu verstehen, sofern diese bei Raumtemperatur fest sind und Filme zu bilden vermögen.

Besonders vorteilhaft werden in dem erfindungsgemäßen Verfahren als Monomere heteroaromatische Verbindungen mit 5- oder 6-gliedrigen Ringsystemen eingesetzt. Die monomeren heteroaromatischen Verbindungen enthalten vorzugsweise 1 bis 3 Heteroatome, insbesondere N-, O- und/oder S-Atome, im Ringsystem und können an den Ring-Kohlenstoffatomen, beispielsweise durch Alkylgruppen, insbesondere mit 1 bis 6 C-Atomen, substituiert sein, wobei vorzugsweise mindestens zwei Ring-Kohlenstoffatome nicht substituiert sind, um die anodische Oxidation einfach und gut durchführen zu können. Beispiele für solche heteroaromatischen Verbindungen sind : Furan, Thiophen, Thiazol, Oxazol, Thiadiazol, Imidazol, Pyridin, 3,5-Dimethylpyridin, Pyrazin und 3,5-Dimethylpyrazin. Ganz besonders vorteilhaft werden in dem erfindungsgemäßen Verfahren als Monomere die Pyrrole eingesetzt, insbesondere das unsubstituierte Pyrrol selber, aber auch die substituierten Pyrrole, wie die an den C-Atomen monoalkyl- oder dialkylsubstituierten Pyrrole und die an den C-Atomen monohalogen- oder dihalogensubstituierten Pyrrole. Von den substituierten Pyrrolen sind die 3,4-Dialkylpyrrole, wie 3,4-Dimethylpyrrol und 3,4-Diethylpyrrol, sowie die 3,4-Dihalogenpyrrole, insbesondere 3,4-Dichlorpyrrol, bevorzugt.

Die monomeren heteroaromatischen Verbindungen können allein, in Mischung miteinander oder auch zusammen mit weiteren Comonomeren eingesetzt werden, wobei das Gewichtsverhältnis zwischen den Comonomeren in weiten Grenzen schwanken kann. Durch Variation der Monomeren können somit in einfacher Weise eine große Vielfalt von Filmen aus Poly(heteroaromaten) hergestellt werden. Dabei ist das unsubstituierte Pyrrol allein oder in Mischung mit anderen der genannten Heteroaromaten das bevorzugte Monomer.

Erfindungsgemäß wird die elektrochemische Polymerisation der heteroaromatischen Verbindungen in Wasser oder Gemischen von Wasser mit wasserlöslichen organischen Lösungsmitteln als Elektrolyt-Dispergierungsmedium durchgeführt. Als wasserlösliche organische Lösungsmittel kommen dabei insbesondere Alkohole, wie z. B. Methanol, Ethanol oder Diethylenglykol ; Ether, wie z. B. Tetrahydrofuran ; Ketone, wie z. B. Aceton ; Acetonitril, Dimethylformamid, Dimethylsulfoxid, etc., in Betracht. Die Elektrolyt-Dispergierungsmedien mindestens soviel Wasser enthalten, daß die monomeren heteroaromatischen Verbindungen in dem Elektrolyt-Dispergierungsmedium nicht gelöst werden, sondern in dispergierten Form enthalten sind. Das Elektrolyt-Dispergierungsmedium besteht zu mindestens 80 Gew.-% aus Wasser. Bevorzugt werden als Elektrolyt-Dispergierungsmedium Systeme, die zu über 90 Gew.-% aus Wasser bestehen, insbesondere Wasser selber. In Abhängigkeit von den weiteren mitverwendeten Zusatzstoffen, insbesondere den Dispergiermitteln und den Leitsalzen, kann der pH-Wert des wäßrigen Elektrolyt-Dispergierungsmediums in dem erfindungsgemäßen Verfahren alkalisch, neutral oder sauer sein und beispielsweise zwischen 2 und 11 liegen. Es ist jedoch darauf zu achten, daß durch Zusätze zu dem Elektrolyt-Dispergierungsmedium die Wirkung der erfindungsgemäßen einzusetzenden Emulgatoren nicht aufgehoben oder zunichte gemacht wird.

Ein wesentliches Merkmal des erfindungsgemäßen Verfahrens besteht darin, daß die elektrochemische Polymerisation in Gegenwart von Emulgatoren durchgeführt wird. Hierbei kommen insbesondere die üblichen und an sich bekannten Emulgatoren, wie sie bei der normalen Emulsionspolymerisation zur Anwendung kommen, in Betracht. Die Emulgatoren sollen in dem verwendeten wäßrigen Elektrolyt-Dispergierungsmedium, insbesondere in Wasser selber, löslich sein und vorzugsweise unter den Bedingungen der elektrochemischen Polymerisation auch löslich bleiben. Als Emulgatoren in dem erfindungsgemäßen Verfahren besonders bewährt haben sich die anionischen oder neutralen Emulgatoren. Beispiele für geeignete und bevorzugte Emulgatoren sind die Alkalisalze, vorzugsweise die Natrium- oder Kalium-Salze von Alkylsulfonaten (insbesondere von $C_{12}$- bis $C_{18}$-Alkyl), Alkylarylsulfonaten (insbesondere mit 10 bis 30 C-Atomen), Alkylsulfaten (insbesondere von $C_{12}$- bis $C_{18}$-Alkyl), Fettalkoholsulfonaten (insbesondere von Fettalkoholen mit 10 bis 30, vorzugsweise 12 bis 18 C-Atomen) oder $C_{10}$-$C_{30}$-Fettsäuren (insbesondere mit einer Kettenlänge zwischen $C_{12}$ und $C_{18}$). Besonders vorteilhaft sind dabei die Natrium- oder Kalium-Salze der genannten Sulfonate oder Sulfate. Zu einer anderen Gruppe sehr geeigneter Emulgatoren gehören die Ester von Polyalkoholen sowie die Alkyl- und Alkylaryl-Poly(ethylenoxid)-Kondensate. Hierzu gehören beispielsweise die Monoether von Polyethylenoxid und langkettigen Alkoholen, insbesondere den Fettalkoholen mit 12 bis 18 C-Atomen, die Ester von Fettsäuren und Polyethylenoxid und die Blockcopolymeren von Propylenoxid und Ethylenoxid, oder auch die Polyethylenglykole selber. Als Emulgatoren für das erfindungsgemäße Verfahren haben sich auch Polymere mit anionischen Gruppen, wie z. B. Polyacrylsäure und deren Salze oder Polystyrylsulfonsäure und deren Salze, als sehr vorteilhaft erwiesen. Hierdurch läßt sich eine noch größere Variation der Eigenschaften der Poly(heteroaromaten) erreichen. Neben dem Zusatz eines einzelnen Emulgators hat es sich häufig als vorteilhaft erwiesen, eine Kombination verschiedener Emulgatoren, beispielsweise eine Kombination von anionischen und neutralen Emulgatoren, einzusetzen.

Zur Einstellung des für den jeweils verwendeten Emulgator günstigsten pH-Bereiches kann dem Elektrolyt-Lösungsmittel gegebenenfalls eine geringe Menge an Säuren, Basen oder üblichen Puffersystemen zugesetzt werden. In einer typischen Ausführungsform des erfindungsgemäßen Verfahrens beträgt die Menge an eingesetztem Emulgator 0,01 Mol bis 0,1 Mol pro Liter Elektrolyt-Dispergierungsmedium. Diese Konzentration des Emulgators kann jedoch in weiten Grenzen unterschritten oder auch überschritten werden und wird bei den niedrigmolekularen Emulgatoren im allgemeinen im Bereich von 0,001 Mol bis 1 Mol Emulgator pro Liter Elektrolyt-Dispergierungsmedium. Diese Konzentration des Emulgators kann jedoch in weiten Grenzen unterschritten oder auch überschritten werden und wird bei den niedrigmolekularen Emulgatoren im allgemeinen im Bereich von 0,001 Mol bis 1 Mol Emulgator pro Liter Elektrolyt-Dispergierungsmedium liegen. Die Menge an eingesetztem Emulgator ist auf alle Fälle so zu bemessen, daß sie für eine gute Dispergierung der eingesetzten Monomeren in dem Elektrolyt-Dispergierungsmedium hinreicht, wobei ein zu großer Überschuß an Emulgator zweckmäßigerweise vermieden werden sollte, aber für die Durchführung des erfindungsgemäßen Verfahrens auch nicht schädlich ist. Die Monomer-Konzentration wird in dem erfindungsgemäßen Verfahren im allgemeinen im Bereich von 0,001 bis 5 Mol, vorzugsweise 0,01 bis 1 Mol Monomere pro Liter Elektrolyt-Dispergierungsmedium gehalten, kann jedoch auch unterhalb oder oberhalb dieser Grenze liegen.

Zur Durchführung des erfindungsgemäßen Verfahrens enthält das Elektrolyt-Dispergierungsmedium auch ein Leitsalz, das insbesondere dem Stromtransport während der elektrochemischen Polymerisation in dem Elektrolyt-Dispergierungsmedium dient. Als Leitsalze kommen dabei alle hierfür üblichen und bekannten ionischen oder ionisierbaren Verbindungen in Betracht, die in dem Elektrolyt-Dispergierungsmedium, insbesondere in Wasser, löslich sind, sofern das Abscheidungspotential ihres Anions bei der elektrochemischen Polymerisation nicht erreicht wird, d. h. das Oxidationspotential des oder der Monomeren niedriger als das Abscheidungspotential des Leitsalz-Anions liegt. Im allgemeinen eignen sich als Leitsalz in dem erfindungsgemäßen Verfahren alle inonischen oder ionisierbaren Verbindungen, bei denen das Abscheidungspotential des Anions über etwa 0,8 bis 1 Volt, gemessen gegenüber der Standard-Elektrode, liegt. Die Leitsalz-Konzentration beträgt in dem erfindungsgemäßen Verfahren im allgemeinen 0,001 bis 1 Mol, vorzugsweise 0,01 bis 0,5 Mol, Leitsalz pro Liter Elektrolyt-Dispergierungsmedium.

Als Kationen für die Leitsalze kommen neben den Erdalkalimetall-Kationen und $H^+$ insbesondere die Alkalimetall-Kationen, vorzugsweise $Li^+$, $Na^+$ oder $K^+$, in Betracht. Sehr günstig sind auch die $NO^+$- und $NO_2^+$-Kationen sowie insbesondere die Onium-Kationen, vor allem des Stickstoffs und des Phosphors, etwa des Typs $R_4N^+$ und $R_4P^+$, worin die Reste R, jeweils unabhängig voneinander, Wasserstoff und/oder niedere Alkylreste, cycloaliphatische Reste oder aromatische Reste bedeuten. Unter den Onium-Kationen sind die tertiären und quaternären Ammonium- und die tertiären und quaternären Phosphonium-Kationen bevorzugt, besonders diejenigen, in denen sich die Reste R von Alkylresten mit 1 bis 6 C-Atomen ableiten.

Als Anionen für das Leitsalz haben sich $BF_4^-$, $AsF_4^-$, $AsF_6^-$, $SbF_6^-$, $SbCl_6^-$, $PF_6^-$, $ClO_4^-$, $HSO_4^-$ und $SO_4^{2-}$ als besonders günstig erwiesen. Darüberhinaus können unter den oben gemachten Vorraussetzungen auch Leitsalze mit anderen Anionen, wie z. B. $Cl^-$ oder $F^-$, verwendet werden. Eine weitere Gruppe von Leitsalzen leitet sich von den aliphatischen oder aromatischen Carbonsäuren ab, beispielsweise der Ameisensäure, Essigsäure, Propionsäure, Buttersäure, Valeriansäure, den höheren Fettsäuren mit 12 bis 18 C-Atomen oder gegebenenfalls substituierter Benzoesäure, wobei neben den Fettsäure-Anionen das Acetat- und Benzoat-Anion für die Leitsalze hervorzuheben sind. Darüberhinaus sind als Leitsalze neben den Alkylsulfaten insbesondere auch die aliphatischen und aromatischen Sulfonate von Interesse. Stellvertretend für diese Gruppe von Leitsalzen seien solche mit dem $CF_3SO^-$- oder einem aromatischen Sulfonsäure-Anion genannt sowie auch die als Emulgator zu verwendenden Alkylsulfonate, Alkylarylsulfonate oder Polystyrylsulfonate.

Es hat sich gezeigt, daß in dem erfindungsgemäßen Verfahren die anionischen Emulgatoren, auch als Leitsalze dienen können. Gemäß einer besonderen Ausführungsform des Verfahrens wird dementsprechend die elektrochemische Polymerisation der heteroaromatischen Verbindungen in dem wäßrigen Elektrolyt-Dispergierungsmedium in Gegenwart von anionischen Emulgatoren, gegebenenfalls unter Mitverwendung von neutralen, nichtionischen Emulgatoren, ohne Zusatz eines weiteren Leitsalzes durchgeführt. In diesem Fall haben sich die Alkylsulfate, die Alkylsulfonate und die Alkylarylsulfonate als Emulgator und gleichzeitiges Leitsalz besonders bewährt.

Der Zusatz eines gesonderten Leitsalzes zu der Elektrolyt-Dispersion ist immer dann notwendig, wenn als alleiniger Emulgator neutrale, nichtionische Emulgatoren verwendet werden. Zusätzliche Leitsalze können natürlich auch dann mitverwendet werden, wenn als anionische Emulgatoren oder Mischungen von anionischen Emulgatoren mit neutralen Emulgatoren zum Einsatz gelangen.

Das erfindungsgemäße Verfahren kann in den üblichen und an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, zwei Elektroden und einer externen Stromquelle. Die Elektroden können dabei beispielsweise aus Graphit oder einem üblichen, inerten Elektrodenmaterial sein, insbesondere aus Edelmetall, wie Platin oder Palladium, Edelstahl, Nickel oder Titan. Da bei der elektrochemischen Polymerisation die monomeren heteroaromatischen Verbindungen anodisch oxidiert werden und sich die gebildeten Polymeren auf der Anode ablagern, sind für die Herstellung von Filmen aus den Poly(heteroaromaten) zumindest die Anode, insbesondere aber beide Elektroden, flächig ausgebildet. Die Größe der Anodenfläche entspricht dabei der Größe des resultierenden Polymerfilmes. Vorzugsweise sind die Flächen der beiden Elektroden parallel zueinander angeordnet.

Außer der erwähnten einfachen elektrolytischen Zelle ohne Diaphragma können auch andere Elektrolyseeinrichtung für das erfindungsgemäße Verfahren Einsatz finden, beispielsweise Zellen mit Diaphragmen oder solche mit Referenzelektroden zur exakten Potentialbestimmung. Häufig ist eine Messung der Strommenge (A sec) zweckmäßig, da hierüber unter anderem die Schichtstärke der abgeschiedenen Filme kontrolliert werden kann.

Normalerweise wird das erfindungsgemäße Verfahren bei Raumtemperatur durchgeführt. Da sich die Reaktionstemperatur für die Polymerisation der heteroaromatischen Verbindungen als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Polymerisationstemperatur im Bereich von 0 bis 50 °C, insbesondere von + 10 bis + 30 °C, als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z. B. eine Batterie, die eine hinreichend hohe elektrische Spannung liefert. Üblicherweise wird die erfindungsgemäße elektrochemische Polymerisation mit einer Spannung im Bereich von 1 bis 10 Volt, vorzugsweise im Bereich von 1,5 bis 4 Volt, betrieben. Die Höhe der gewählten Spannung hängt dabei unter anderem auch von dem Elektrodenabstand ab und ist umso höher, je größer dieser ist. Für die Stromdichte haben sich bei dem erfindungsgemäßen Verfahren Werte im Bereich von 0,05 bis 50 mA/cm², vorzugsweise im Bereich von 0,1 bis 5 mA/cm², als günstig und vorteilhaft erwiesen.

Die Dauer der Elektrolyse hängt unter anderem von dem verwendeten Elektrolyt-System, den jeweiligen Elektrolyse-Bedingungen sowie insbesondere auch von der gewünschten Filmdicke ab. Üblicherweise liegt die Elektrolysedauer im Bereich von einigen oder mehreren Stunden. So lassen sich beispielsweise ohne weiteres innerhalb einer Stunde Filme von einigen μm Dicke, beispielsweise von 5 bis 10 μm Dicke erhalten, so daß sich beispielsweise in einem Zeitraum von 2 bis 12 Stunden Filme einer Dicke im Bereich von 10 bis 100 μm herstellen lassen.

Die während der Elektrolyse anodisch abgeschiedenen filmförmigen Poly(heteroaromaten) werden zur Entfernung von anhaftendem Leitsalz und/oder Emulgator mit Lösungsmitteln, vorzugsweise Wasser oder wäßrigen Lösungsmitteln, gewaschen und bei Temperaturen im Bereich von 25 bis 150 °C, vorzugsweise unter Vakuum, getrocknet. Bei Einsatz von Graphit-, Edelmetall-, Stahl-, Titan-, Nickel- oder ähnlichen-Elektroden lassen sich danach die Filme der Poly(heteroaromaten) im allgemeinen leicht von der Elektrode ablösen, vor allem wenn Schichtstärken über 20 μm abgeschieden wurden. Die so erhaltenen Filme sind selbsttragend, stabil, haben gute mechanische Eigenschaften und Festigkeiten und eine gut ausgebildete, zusammenhängende Oberfläche.

Die erfindungsgemäß hergestellten filmförmigen Poly(heteroaromaten) besitzen nicht nur gute mechanische Eigenschaften, sondern zeigen darüberhinaus im allgemeinen auch gleichzeitig eine hohe elektrische Leitfähigkeit, im allgemeinen über $10^{-2}$ Ohm$^{-1}$cm$^{-1}$, insbesondere über $10^0$ Ohm$^{-1}$cm$^{-1}$, gemessen nach der Zweipunkt- oder Vierpunkt-Methode. Die elektrisch leitfähigen Poly(heteroaromaten) enthalten dabei zumindest teilweise das Anion des bei ihrer Herstellung verwendeten Leitsalzes als Dotierungsmittel eingelagert. Es hat sich überraschenderweise gezeigt, daß auch dann elektrisch hochleitfähige Polymer-Filme erhalten werden, wenn das erfindungsgemäße Verfahren unter Einsatz von anionischen Emulgatoren ohne Zusatz an weiteren Leitsalzen durchgeführt wird. Die anionischen Emulgatoren, wie z. B. die Alkyl- oder Alkylarylsulfonate, wirken in diesem Fall nicht nur als Dispergiermittel, sondern darüberhinaus gleichzeitig auch als Leitsalz und Dotierungsmittel für die erhaltenen Poly(heteroaromaten). Auch in diesem Fall werden elektrische Leitfähigkeiten über $10^0$ Ohm$^{-1}$cm$^{-1}$ erzielt. Setzt man in dem erfindungsgemäßen Verfahren neben den anionischen Emulgatoren oder an deren Stelle andere Leitsalze ein, so werden hierbei für die Herstellung von elektrisch hochleitfähigen Produkten die Tetrafluoroborate, Hexafluoroarsenate, Hexafluoroantimonate, Hexachloroantimonate, Hexafluorophosphate, Perchlorate, Acetate und Benzoate bevorzugt. Sofern die elektrische Leitfähigkeit der erfindungsgemäß hergestellten Poly(heteroaromaten) noch gesteigert oder verbessert werden soll, ist es durchaus möglich, diese Filme in an sich bekannter Weise in der Gasphase oder in Lösung mit den üblichen Dotierungsmitteln, wie z. B. AsF$_5$, SbF$_5$, SbCl$_5$, etc., zu behandeln. Eine solche zusätzliche chemische Dotierung der erfindungsgemäß hergestellten Poly(heteroaromaten) zur Erhöhung der elektrischen Leitfähigkeit ist jedoch in aller Regel nicht von Nöten.

Die erfindungsgemäß hergestellten Poly(heteroaromaten) haben sehr gute anwendungstechnische Eigenschaften und können in allen Bereichen eingesetzt werden, in denen auch die bisherigen Poly(heteroaromaten) Anwendung finden. Hierzu gehört beispielsweise der Einsatz zur Herstellung von Katalysatoren, elektrischen Schaltern, Halbleiter-Bauteilen, Elektroden, Abschirmmaterialien sowie zur antistatischen Ausrüstung von Kunststoffen.

Die Erfindung wird durch die nachfolgenden Beispiele näher erläutert. Die in den Beispielen angegebenen Teile und Prozente beziehen sich, sofern nicht anders vermerkt, auf das Gewicht.

## Beispiel 1

3 Teile Natriumdodecylsulfat, 2 Teile Natriumhexafluorphosphat, 2 Teile Pyrrol und 100 Teile Wasser werden in eine nichtgelüftete Elektrolysezelle gegeben. Die Elektroden bestehen wahlweise aus Platin bzw. Nickel. Bei einer Anodenstromdichte von 200 $\mu A/cm^2$ und einer Zellenspannung von 2,2 V kann nach einer Elektrolysedauer von 12 Stunden ein 80 $\mu m$ dicker Polypyrrolfilm von der Anode abgenommen werden. Der einheitliche Film zeigt eine Leitfähigkeit von 40 $(\Omega cm)^{-1}$.

## Beispiel 2

11 Teile Natriumdodecylsulfat, 2 Teile Pyrrol und 100 Teile Wasser werden in eine Elektrolysezelle gemäß Beispiel 1 gegeben. Unter den gleichen Elektrolysebedingungen wie in Beispiel 1 kann nach 12 Stunden ein 70 $\mu m$ dicker, einheitlicher Polypyrrolfilm mit einer Leitfähigkeit von 35 $(\Omega cm)^{-1}$ von der Anode abgenommen werden.

## Beispiel 3

10 Teile Polyoxyethylenlaurylether (®Brij 35), 1 Teil Natriumtetrafluorborat, 2 Teile Pyrrol und 100 Teile Wasser werden unter gleichen Bedingungen wie in Beispiel 1 12 Stunden elektrolysiert. Auf der Anode entsteht ein 40 $\mu m$ dicker Polypyrrolfilm, dessen Leitfähigkeit 10 $(\Omega cm)^{-1}$ beträgt.

## Beispiel 4

2 Teile Polystyrolsulfonat-Natriumsalz ($M_w$ 700 000), 2 Teile Pyrrol und 100 Teile Wasser werden in eine Elektrolysezelle (gemäß Beispiel 1) gegeben. Bei einer Anoden-Stromdichte von 150 $\mu A/cm^2$ entsteht innerhalb von 12 Stunden ein 90 $\mu m$ dicker Polypyrrolfilm, der eine Leitfähigkeit von 8 $(\Omega cm)^{-1}$ zeigt.

## Beispiel 5

5 Teile Natriumdodecylsulfat, 1 Teil 3,4-Dichlorpyrrol, gelöst in 10 Teilen $CH_3CN$, werden in 100 Teilen Wasser emulgiert. In einer wie in Beispiel 1 beschriebenen Elektrolysezelle wird nach 12 Stunden bei einer Stromdichte von 400 $\mu A/cm^2$ ein 40 $\mu m$ dicker Polymerfilm erhalten, der aus 3,4-Dichlorpyrrol-Grundeinheiten besteht. Die Leitfähigkeit des Films beträgt 20 $(\Omega cm)^{-1}$.

## Beispiel 6

3,1 Teile Polyacrylsäure ($M_w$ 250 000), 100 Teile Wasser und 2 Teile Pyrrol werden in eine Elektrolysezelle (gemäß Beispiel 1) gegeben. Nach 24 Stunden wird ein ca. 60 $\mu m$ dicker, einheitlicher Film erhalten, dessen Leitfähigkeit $10^{-1}$ $(\Omega cm)^{-1}$ beträgt.

In allen Beispielen wurden die erhaltenen Polymerfilme nach der mechanischen Abnahme von der Anode 12 Stunden mit Methanol extrahiert und im Vakuum getrocknet. Die mechanische Flexibilität war hervorragend. Filme von 80 $\mu m$ Dicke konnten ohne Bruch zu einem Zylinder von 2 mm Durchmesser gebogen werden.

## Patentansprüche

1. Verfahren zur Herstellung von Poly(heteroaromaten) durch anodische Oxidation von heteroaromatischen Verbindungen in einem Wasser enthaltenden Elektrolyt-Dispergierungsmedium in Gegenwart von Leitsalzen unter Abscheiden der Poly(heteroaromaten) auf der Oberfläche der Anode, dadurch gekennzeichnet, daß man die Polymerisation in einem zu mindestens 80 Gew.-% aus Wasser bestehenden Elektrolyt-Dispergierungsmedium, welches die monomeren heteroaromatischen Verbindungen dispergiert enthält, unter Zusatz von in dem Dispergierungsmedium löslichen Emulgatoren durchführt.

2. Verfahren nach Anspruch 1, dadurch gekennzeichnet, daß die Polymerisation unter Einsatz von anionischen Emulgatoren ohne Zusatz von weiterem Leitsalz durchgeführt wird.

3. Verfahren nach Anspruch 1, dadurch gekennzeichnet, daß die Polymerisation unter Einsatz von neutralen und/oder anionischen Emulgatoren und unter Mitverwendung von einem zusätzlichen Leitsalz durchgeführt wird.

4. Verfahren nach Anspruch 1, dadurch gekennzeichnet daß die Emulgatoren in einer Menge von 0,001 bis 1 Mol pro Liter Elektrolyt-Dispergierungsmedium eingesetzt werden.

5. Verfahren nach einem der Ansprüche 1 bis 4, dadurch gekennzeichnet, daß in dem Elektrolyt-Dispergierungsmedium lösliche Leitsalze in einer Menge von 0,001 bis 1 Mol pro Liter Elektrolyt-Dispergierungsmedium eingesetzt werden.

6. Verfahren nach einem der Ansprüche 1 bis 5, dadurch gekennzeichnet, daß die monomeren heteroaromatischen Verbindungen in einer Konzentration von 0,001 bis 5 Mol pro Liter Elektrolyt-Dispergierungsmedium eingesetzt werden.

## Claims

1. A process for the preparation of a poly(heteroaromatic) by anodic oxidation of a heteroaromatic compound in a water-containing electrolyte dispersing medium in the presence of a conductive salt, with deposition of the poly(heteroaromatic) on the surface of the anode, wherein the polymerization is carried out in an electrolyte dispersing medium which consists of at least 80 % by weight of water, and in which the monomeric heteroaromatic compound is dispersed, an emulsifier that is soluble in the dispersing medium being added.

2. A process as claimed in claim 1, wherein the polymerization is carried out using an anionic emulsifier without the addition of a further conductive salt.

3. A process as claimed in claim 1, wherein the polymerization is carried out using neutral and/or anionic emulsifiers together with an additional conductive salt.

4. A process as claimed in claim 1, wherein the emulsifier is used in an amount of from 0.001 to 1 mole per litre of electrolyte dispersing medium.

5. A process as claimed in any of claims 1 to 4, wherein the conductive salt that is soluble in the electrolyte dispersing medium is used in an amount of from 0.001 to 1 mole per litre of electrolyte dispersing medium.

6. A process as claimed in any of claims 1 to 5, wherein the monomeric heteroaromatic compound is used in a concentration of from 0.001 to 5 moles per litre of electrolyte dispersing medium.

**Revendications**

1. Procédé de préparation de composés poly(hétéroaromatiques) par l'oxydation anodique de composés hétéroaromatiques dans un milieu dispersif de l'électrolyte contenant de l'eau, en présence de sels conducteurs et avec séparation des composés poly(hétéroaromatiques) à la surface de l'anode, caractérisé en ce que l'on réalise la polymérisation dans un milieu dispersif de l'électrolyte qui se compose d'au moins 80 % en poids d'eau, qui contient les composés hétéroaromatiques monomères en dispersion, avec addition d'émulsifs solubles dans le milieu dispersif.

2. Procédé suivant la revendication 1, caractérisé en ce que l'on réalise la polymérisation avec introduction d'émulsifs anioniques, sans addition d'un sel conducteur supplémentaire.

3. Procédé suivant la revendication 1, caractérisé en ce que l'on réalise la polymérisation avec addition d'émulsifs neutres et/ou anioniques et avec co-utilisation d'un sel conducteur supplémentaire.

4. Procédé suivant la revendication 1, caractérisé en ce que l'on utilise les émulsifs en une proportion de 0,001 à 1 mole par litre de milieu dispersif de l'électrolyte.

5. Procédé suivant l'une des revendications 1 à 4, caractérisé en ce que l'on utilise dans le milieu dispersif de l'électrolyte, des sels conducteurs solubles en une proportion de 0,001 à 1 mole par litre de milieu dispersif de l'électrolyte.

6. Procédé suivant l'une des revendications 1 à 5, caractérisé en ce que l'on utilise les composés hétéroaromatiques monomères en une concentration de 0,001 à 5 moles par litre du milieu dispersif de l'électrolyte.